(19) Europäisches Patentamt
European Patent Office
Office européen des brevets

(11) **EP 4 632 315 A1**

(12) **EUROPEAN PATENT APPLICATION**

(43) Date of publication:
**15.10.2025 Bulletin 2025/42**

(21) Application number: **25162349.2**

(22) Date of filing: **07.03.2025**

(51) International Patent Classification (IPC):
**G01B 7/06** *(2006.01)* **G01B 15/02** *(2006.01)*

(52) Cooperative Patent Classification (CPC):
**G01B 15/02; G01B 7/06;** G01B 2210/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.04.2024 US 202418629937**

(71) Applicant: **HONEYWELL INTERNATIONAL INC.**
**Charlotte, NC 28202 (US)**

(72) Inventors:
• **IATCENKO, Anton**
**Charlotte 28202 (US)**
• **BROUN, David**
**Charlotte 28202 (US)**
• **HUGHES, Michael**
**Charlotte 28202 (US)**

(74) Representative: **Houghton, Mark Phillip**
**Patent Outsourcing Limited**
**1 King Street**
**Bakewell, Derbyshire DE45 1DZ (GB)**

(54) **LITHIUM-ION BATTERY MICROWAVE SINGLE SIDE CALIPER AND CONDUCTIVITY MEASUREMENTS**

(57) Sensor system for contactless, single-side thickness measurements of lithium-ion battery electrode coating includes a high-frequency microwave resonator, a mid-frequency RF resonator, and an optional optical displacement sensor. The high frequency measurement probes the surface impedance and the dielectric properties of the sample which are then used as inputs to calculations involving the lower frequency coil to determine the thickness of the coating. The optical displacement sensor measures the lift-off (separation between the measurement subject and the sensor) in real time and the data is used when interpreting the raw data obtained from the sensor system. The microwave resonator has a concave metallic mirror that is positioned above the electrode. An RF/microwave choke can be included in the microwave resonator to suppress radiative energy loss. The microwave resonator can be operated with one or more modes. The microwave resonator and RF resonator can be coupled to respective read-out circuits.

FIG. 1

EP 4 632 315 A1

**Description**

FIELD OF THE INVENTION

The present invention generally relates to an on-line contactless surface-scanning sensor that is particularly suited for lithium-ion electrode manufacturing. The sensor measures the thickness and the electrical conductivity of the electrode coating.

BACKGROUND OF THE INVENTION

A lithium-ion cell is one type of secondary battery and contains four main parts: a positive electrode (a cathode), a negative electrode (an anode), a separator that is placed between the electrodes to allow the passage of lithium ions while preventing the passage of electrons, and an electrolyte. Examples of a cathode active material may include but are not limited to: lithium mixed-metal oxides, lithium metal phosphates, or related materials. Examples of anode materials may include but are not limited to: graphite, silicon, or composites thereof. The electrolyte provides transport of the ions, and may be a liquid or a solid. Battery manufacture begins with the fabrication of large sheets of double-side coated anode copper substrates and double-side coated cathode aluminum substrates. The electrodes are manufactured on a continuous roll-to-roll process where pre-mixed anode or cathode material is coated onto both sides of a sheet of metal substrate, which functions as a current collector. The double-side coated sheet undergoes drying processes whereby solvent is removed to produce electrode sheets that are compressed to a desired density and slit or cut into appropriate-sized double-sided coated metal substrates.

To achieve and maintain the quality of continuous, roll-to-roll production of electrodes, it is beneficial to continuously carry out online measurements of quality parameters that are strongly linked to battery performance. Electrodes must consistently meet targets for coating thickness and electric properties. Electrode manufacturers occasionally directly measure the thickness of the coatings on their foils. This is a complicated lab measurement as it involves cutting the foil (being careful to not affect the structure), mounting the sample and looking at it from the edge with an optical or electron microscope. This is time consuming, especially if many points are to be measured, and destructive: the electrode that has been measured cannot be used afterwards. Furthermore, it is only practical to measure a small area of the sheet. If manufacturers detect anomalies, they can investigate why there is a problem such as the compressibility of one side of the electrode being significantly different from that on the other. Such variability is possible because the coatings are deposited at different times, also the first coating will pass through the oven twice but the second only once. If there is a compressibility differential, then it will likely mean that both sides are compressed less than ideally. While there is likely not an automated process intervention that could be made to address this, a scanning measurement would allow the manufacturer to rapidly detect deviations from target parameters and investigate possible causes of the problem, such as the oven/driers and mixers.

Prior art thickness measurement techniques include: (a) Pulsed Eddy Current which uses electromagnetic response at different frequencies to measure layer thicknesses, (b) optical displacement sensors which can measure the total thickness, (b) Microwave Moisture Sensors that use a resonator, usually at one or two frequencies to measure loss in a transmissive configuration which is related to the amount of moisture in the sample, and (d) Laboratory-based higher order microwave cavity measurement as described in Shu et al, "Millimeter Wave Measurement of the Low-Loss Dielectric in Vacuum Electronic Devices With Reflection-Type Hemispherical Open Resonator, Journal of Infrared, Millimeter and Terahertz Waves, 36(6):556-568, 2015. None of these achieves an on-line sensor that can measure the thickness of a single side of the coating on a double-side coated electrode.

SUMMARY OF THE INVENTION

The present invention is based, in part, on the development of a sensor system for contactless, single-side thickness measurements that includes a high-frequency microwave resonator, a mid-frequency coil, and an optical displacement sensor, which is optional. The sensor system is particularly suited for measuring the individual thicknesses of coatings on each side of a double-sided electrode sheet or web, which includes a metal substrate or foil that is coated on each side with electrode coating. The high frequency measurement is designed to probe the surface impedance and dielectric properties of the coating. This can be a useful measurement by itself for the electrode manufacturers, as it allows for rapid defect detection and, in some cases, manufacturing process optimization.

As well as being useful in their own right, the conductivity measurements of the electrode coating are used as inputs to calculations involving the lower frequency coil to determine the thickness of the coating. It is not necessary to measure the thickness of the entire double-sided electrode to ascertain the thickness of each coating. As is apparent, the sensor system can also be used to determine the coating thickness of a single-sided electrode sheet or web without the need to measure the entire electrode. By combining thickness measurement with basis weight measurement made with an x-ray or beta-ray sensors, the porosity of the coating can be inferred. An optical displacement sensor measures the lift-off (separation between the measurement subject and the sensor) in real time and the data, if available, is taken into account when interpreting the raw data obtained from the sensor.

In one aspect, the invention is directed to a sensor system that includes: (i) a microwave resonator; (ii) a radio-frequency (RF) resonator; (iii) an optical displacement sensor; (iv) a first read-out circuit that is coupled to the microwave resonator; (v) a second read-out circuit that is coupled to the RF resonator and (vi) means for analyzing sensor data from the microwave and RF resonators. For example, a computer device, that includes a processor and a memory, which is coupled to the microwave resonator and the RF resonator, can be used to analyze the data.

In the sensor system, the RF resonator can include one or more capacitors and one or more inductors. The inductor(s) and capacitor(s) comprising the RF resonator can be arranged in a topology that supports multiple resonant frequencies. In preferred embodiment of the sensor system, the RF resonator circuit includes means of adjusting capacitance and inductance of the respective elements. In addition, the RF resonator can include one or more capacitors and one or more inductors that are adjustable. The RF resonator circuit includes one or multiple varicap diodes or similar circuit elements with adjustable capacitance.

The microwave resonator is formed by the sample of interest and a concave metallic mirror suspended a few millimeters above it. The distance between the sample and the lowest point of the mirror (lift-off) ensures that the sample is not damaged during the measurement. It also makes the microwave resonator a quasi-open structure, which can suffer from radiative energy loss. To minimize the radiative losses, an RF choke can be included near the edge of the concave mirror.

The microwave resonator can be operated using one or more coupling antennas or probes positioned in the vicinity of the resonator. In general, the microwave resonator supports multiple distinct resonances, over a range of frequencies. It is possible to couple one or multiple resonances with a single antenna, which can also serve as the source of energy and as a receiver that picks up information. In the preferred embodiment, a pair of coupling antennas is used.

The microwave resonator can be operated with one or more mode patterns, either simultaneously or sequentially, in order to extract information at different frequencies. The optical displacement sensor, if present, can be used to make mode identification more robust.

Modes with different vector orientations of the electromagnetic field can be used to simultaneously extract information on both the surface impedance and dielectric properties. Specifically, modes that have primarily a transverse electric character can be used to induce eddy currents in the coating and the substrate, thus probing the surface impedance of the sample. Modes that have primarily transverse-magnetic character contain electric fields that terminate on the surface of the sample, and can be used to probe its dielectric properties.

The microwave resonator and the RF resonator are essentially different non-interacting devices. The microwave resonator and the RF resonator will each have a separate set of resonator frequencies. The microwave resonator and RF resonator can be read out in one of several ways: (i) as part of an oscillator circuit configured to operate at the desired resonant frequency (or frequencies in the case of multimode operation); (ii) using a frequency sweep measurement; or (iii) using a ring-down measurement. The information from the microwave resonator and/or RF resonator can be obtained by exciting the electromagnetic field with (a) coupling antenna(s) and picking up the information from either the same antenna(s) or a different antenna(s).

The RF resonator is a low-frequency resonator that is preferably in the form of a LC-circuit consisting of a coil and a capacitor. The coil is suspended a few millimeters above the sample so that the current in it can induce eddy currents in the sample. The capacitor is used to close the LC-circuit loop and make it resonant in the desired frequency range.

In a preferred application, by using a resonator perturbation technique (which is similar to that used for the microwave resonator) the losses incurred by the eddy currents induced in the sample can be inferred from the measured dissipation factor of the LC resonator. With the resonant frequency of the LC resonator selected so that the fields penetrate deep into the sample and induce some current in both the coating and the substrate, the total losses will be determined by the impedance properties of both the coating and the substrate of the electrode, as well as the thickness of the coating.

When the sample is a continuous moving sheet, the lift-off can vary over a wide range and the resonator constants that relate the surface impedance and dielectric properties of the coating to the resonant frequencies and the dissipation factors will change constantly with lift-off. This variation of lift-off is factored into the calculation of thickness of the coating either by using the optical displacement sensor, if present, or by inferring the lift-off from the measured resonant frequencies.

In one embodiment, the sensor system is configured to monitor a continuous moving double-side coated electrode sheet and includes dual scanning sensor heads, each with a microwave resonator and an RF resonator that face opposite sides of the double-side coated electrode sheet that moves in a gap defined by the dual sensor heads. In operation, the microwave resonator and the RF resonator are both energized and the sensor data from the components is analyzed to calculate the thickness of the coating layer on the electrode sample.

While the invention will be illustrated using electrodes for lithium-ion batteries, it is understood that the techniques described hereafter can be applied to caliper and conductivity measurements for electrodes used in other types of electrochemical cells and batteries, such as sodium-ion batteries. Anodes for sodium-ion batteries include a current collector that is coated with anode active materials such as, for example, carbon, graphite, or sodium metal. The anode current collector can be made of metal, for example, aluminum, copper or steel. The cathodes include a current collector that is coated with a cathode active material such as, for example, sodium transition metal oxides. The current collector can be made of metal, for example, aluminum, copper, steel or nickel.

BRIEF DESCRIPTION OF THE DRAWINGS

FIG. 1 is a single-side coating thickness measurement sensor system;
FIG. 2A is a cross-sectional view of the microwave resonator;
FIG. 2B is the cross-sectional view of microwave resonator taken along the line 2B-2B in FIG. 2A;
FIG. 3A illustrates an LC resonator;
FIG. 3B illustrates a multi-frequency RF resonator;
FIG. 4 is a read-out circuit for a single-mode oscillator operating at microwave frequencies;
FIG. 5 is a read-out circuit for the two-mode oscillator operating at microwave frequencies;
FIG. 6 is a read-out circuit for a low frequency oscillator;
FIG. 7A is a cross-sectional view of dual scanning sensor system; and
FIG. 7B is a dual scanning sensor system mounted to an O-frame structure;

DETAILED DESCRIPTION OF THE PREFERRED EMBODIMENTS

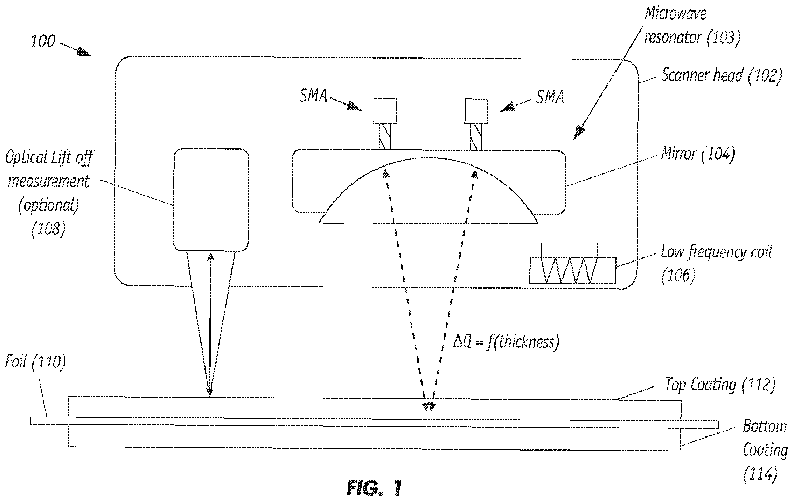

As shown in Fig. 1, the sensor system 100 includes a sensor head 102 which houses a curved mirror 104, which is part of the microwave resonator 103, a low frequency coil 106, and an optical lift-off sensor 108. The sensor system 100 is positioned over a double-side coated electrode that includes a metal foil or substrate 110 that has top coating 112 and a bottom coating 114. The high-frequency sensor measures the surface impedance and dielectric properties of the top coating 112 which data is combined with the low-frequency measurements to determine the thickness (caliper) of the top coating. The optical lift-off sensor 108 can comprise a laser triangular sensor or other type of displacement sensor, such as a chromatic confocal displacement sensor. To make the single-side coating thickness measurement, the measurements from component sensors are combined.

High Frequency Resonator

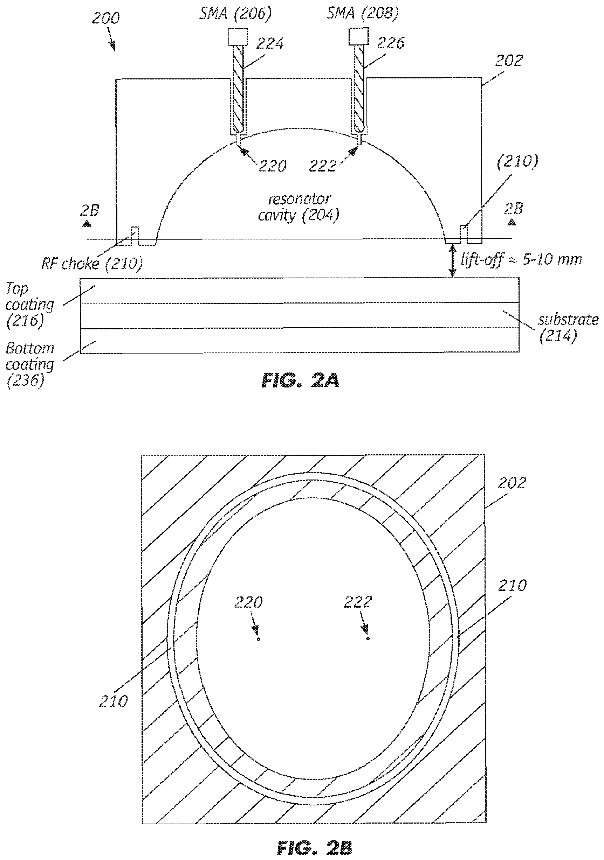

Fig. 2A illustrates the microwave resonator 200, that serves as the high-frequency resonator 103 in Fig. 1, and which is formed from a member 202 that defines a resonator cavity 204. The resonator is completed by the presence of the sheet (214, 216, 236). Fig. 2B is a cross-sectional view of the cavity resonator of Fig. 2A. The cavity has two coupling holes. A first coupling probe 224 with a distal probe or tip 220 is inserted into the first hole 1. A SubMiniature version A (SMA) connector 206 is attached to the proximal end of first coupling probe 224. A second coupling probe 226 with a SMA connector 208 and a distal probe or tip 222 is inserted into the second hole 2. The tips 220 and 222 are preferably made from loops of metal wire. An RF choke in the form of a small groove around the perimeter of the cavity 204 reduces the radiative energy loss through the gap between the top coating 216 and the curved mirror which is attached to substrate 214. The substrate has a bottom coating 236. This gap (also called the lift-off) preferably ranges between 0 and 10 mm.

The cavity resonator 200 is used to determine the surface impedance and dielectric properties of the top coating 216. The cavity 204 of the resonator is the space bounded by a sample (below) and by a semi-ellipsoidal metallic mirror (above and sides). A structure like that can support standing electromagnetic waves, which form the foundation for the measurement techniques of the present invention. A standing wave in this case is an electromagnetic field, which oscillates with a specific frequency ($f_0$). This oscillating field induces eddy currents in the boundaries of the cavity 204, which become an energy dissipation mechanism for the resonator: as the boundaries of the cavity have finite electrical conductivity, the energy is lost to Joule heating. This energy dissipation mechanism is employed to determine the sample properties: the exact rate at which energy is lost this way is determined by the field profile, the oscillation frequency and the conductivity of the boundaries ($\sigma$). The field profile is obtained from numerical simulation of the system. The oscillation frequency and power are measured. The energy dissipation rate can then be calculated, and thus conductivity of the sample can be deduced.

The semi-ellipsoidal geometry of the top part of the resonator member 200 was chosen for two reasons: (1) to concentrate the field profile around the vertical axis of the resonator and (2) to remove the mode degeneracy that comes from perfect rotational symmetry. It is commonly known that a hemispherical mirror opposing a flat ground plane can support standing electromagnetic waves that are concentrated in the desired way, known as the Gaussian modes. As the field intensity of these modes decreases exponentially away from the central axis, the resonator can be left quasi-open by lifting the curved mirror above the top coating 2 16, without losing too much energy to radiation through the gap. This radiative energy loss is further reduced by adding an RF choke around the perimeter of the cavity. This arrangement allows a contactless measurement, which is non-destructive, that is, the surface of the electrode being tested cannot get scratched, and can be used on a moving sample.

One drawback of hemispherical resonators is that most modes come in pairs, i.e. there are two standing wave profiles corresponding to the same resonant frequency. As in practice the resonator cannot actually be perfectly symmetric, this arrangement would generate a pair of modes that are very close in frequency, which would distort the measurements. To avoid this, with the present invention, a preferred geometry of the curved mirror is a hemisphere "stretched" into a semi-ellipsoidal shape as shown Fig. 2B, thus creating a stable separation between the resonant frequencies corresponding to different modes. In this fashion, the mode which is excited at a particular frequency is known exactly, and the measurements are interpreted accordingly.

Lastly, it is noted that the resonant frequencies of cavity resonators are typically inversely proportional to the linear dimension of the resonator. In other words, one can scale the resonant frequencies by making the cavity larger or smaller. To select an appropriate range for the resonant frequencies, the present invention takes into account the skin effect: the eddy currents induced in the boundaries of the resonator decrease exponentially as the depth increases, with the characteristic length scale

$$\delta = \sqrt{\frac{2}{\omega\mu\sigma}}\ (1)$$

known as the skin depth; here $\mu$ and $\sigma$ are the magnetic permeability and the electric conductivity of the conductor comprising the boundary, and $\omega = 2\pi f_0$.

In the present case, a semi-ellipsoidal resonator with semi-axis of 50mm, 40mm and 40mm for x, y and z directions, respectively was selected; this choice gives a suitable resonant mode at about 14 GHz. At this frequency, the skin depth in the typical coated substrate samples is at most a few microns, so the substrate is effectively invisible to resonator. This allows measurement of the coating properties without having to incorporate properties of the substrate into the calculations.

To perform the required measurements, namely measuring the resonant frequency and the dissipative properties of a given mode, the resonator is turned into a two-port device by adding a pair of probes to the design. The probes can simply be created by stripping the outer conductor and the insulator from the end of a coaxial cable, bending the center conductor backwards and connecting it to the outer conductor, thus creating a loop. These loops are then inserted through the opening drilled through the top of the curved mirror, which allows the currents in the loops and the magnetic field in the cavity to interact with each other. SMA (or similar) connectors are attached to the other ends of the coaxial cables, thus creating the two ports of the resonator, as shown in Fig. 2A.

The response of the resonator to an alternating input voltage $V_{in}$ on port 1 (206) is as follows:

1. The input voltage induces current flow from the port through the loop and into the ground.
2. The alternating current in the coupling loop creates a magnetic field in the coupling hole 220, which in turn excites a field within the cavity of the resonator.
3. The field within the cavity of the resonator creates a magnetic field in the coupling hole 222, which in turn creates a magnetic flux through the coupling loop on port 2 (226).
4. This magnetic flux creates the electromotive force inside the loop, which becomes the output voltage $V_{out}$ on port 2 (208) of the sensor.

Low Frequency Resonator

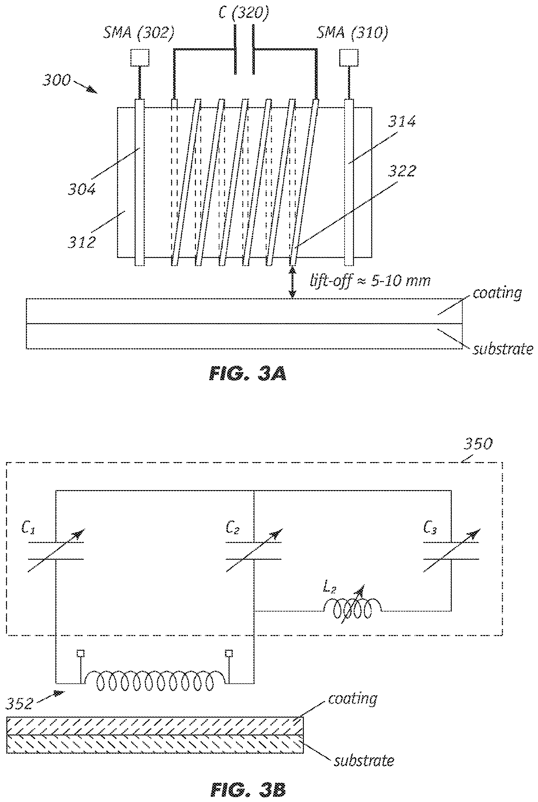

Fig. 3A illustrates in further detail the structure of the low frequency coil 106 of the sensor system 100 shown in Fig. 1. To measure the response of the coated substrate sample at lower frequencies an LC resonator 300 consisting of a coil 322 and a capacitor 320 is used; the two are connected together to form a closed loop LCR circuit. Such a circuit can support standing waves, which in this case is the voltage across and the current through either component of the circuit, both oscillating with frequency $f_0$.

The coil 322 is formed by wrapping a wire around a dielectric core 312 with preferably a rectangular cross-section, and suspended above the coated substrate sample. According to Faraday's law, the alternating current in the coil 322 induces an alternating electromagnetic field through and around the coil. This induced field then induces eddy currents in the sample, thus creating an energy dissipation mechanism and effectively adding a resistor-like component to the circuit. Similar to the cavity resonator, the exact amount of dissipation is determined by the impedance properties of the sample, which is the basis for this measurement technique.

The exact geometry of the coil (and therefore its inductance) is selected by balancing two requirements: making the spot size, which is the part of the sample in which the eddy currents are induced, as small as possible, and inducing enough eddy current in the sample so that the corresponding losses are larger than the resistive losses in the coil itself. The latter objective is also accomplished by making the coil out of a low-loss Litz wire. To choose the capacitor C, recall that the resonant frequency $f_0$ for an LC circuit
is given by

$$f_0 = \frac{1}{2\pi\sqrt{LC}}, \tag{2}$$

For this resonator, the frequency fo was chosen so that the skin depth in the sample as given by (1) is larger than the expected coating thickness, which will allow for the eddy currents to be induced in the substrate as well as the coating. That means that the dissipative properties of the resonator will be determined not only by the impedance properties of the coating, but also by its thickness and the impedance properties of the substrate.

To allow for greater flexibility of the sensor system, the RF resonator can also include means for adjusting capacitance such as adjustable capacitors or varicap diodes; this will allow the resonant frequency to be adjusted in the field to suit the particular material being measured. Moreover, the RF resonator can also be formed by several inductors and capacitors connected in a configuration that supports multiple resonant frequencies.

Fig. 3B illustrates a configuration for a multi-frequency RF resonator. The circuit 350 comprises capacitors $C_1$, $C_2$ and $C_3$ and auxiliary inductor $L_2$ which are all adjustable. Circuit 350 is connected to inductor 352 which is the same as that in Fig. 3A.

In the present case, a 10-turn coil was made on a form with cross section of 30mm by 60mm. Combined with a 100 nF capacitor, this will give a suitable resonant mode at about 1.5 MHz.

As in the case the cavity resonator, the low frequency LC resonator was turned into a two-port device by adding a pair of probes as shown in Fig. 3. In this case the probes 304 and 314 are created placing two single (or multiple) turn wire loops onto the coil form 312 to either side of the main coil 322. For each of these loops, the two ends of the wire forming it are attached to a two-conductor connector, e.g. SMA., thus creating the two ports 302 and 310.

The response of the resonator to an alternating input voltage $V_{in}$ on port 1 (302) is as follows:

    1. The input voltage induces current flow from the port through the loop 304 and into the ground.
    2. This alternating current in the loop creates an alternating magnetic field through the main coil 322.
    3. The magnetic field through the main coil excites the resonant standing wave in the LCR circuit.
    4. The magnetic field corresponding to the standing wave passes through the coupling loop 314 on port 2, thus creating the electromotive force inside the loop, which becomes the output voltage $V_{out}$ on port 2 (310) of the sensor 300.

The exact response of the sensor 300, which is typically summarized as a frequency-dependent transmission amplitude $S_{12} = V_{in}/V_{out}$, is determined by the resonant and dissipative properties of the resonator, from which the effective surface impedance of the sample can be deduced.

Power Dissipation Measurement

There are two possible ways to perform the measurements on the cavity resonator 200 of Fig. 2A: using (a) a vector network analyzer (VNA) or (b) an oscillator read-out circuit. The latter is preferred for field deployment as it allows for much larger measurement rate and is not affected by the mechanical vibrations while the former is simpler to setup as it does not require any frequency specific components.

The measurement with a (two-port) VNA is performed as follows:

$$S_{1,2}(f) = \frac{V_2}{V_1}. \tag{3}$$

    1. The two ports 206, 208 of the resonator 200 are connected directly to the ports on the VNA.
    2. An appropriate a range of frequencies (containing the predicted resonant frequency) and the number of frequencies to test is selected.
    3. For each frequency in the test set, the VNA sends out a voltage $V_1$ at that frequency through port 1 (206), for a time period greatly exceeding a single period of the signal.

4. The VNA then measures the output voltage from port 2 (208), and returns the transmission scattering parameter:
5. It is known that in the vicinity of a resonant frequency $f_0$, the transmission amplitude of a resonator approximately follows a Lorentzian curve:

$$S_{21} \propto \frac{1}{f - (f_0 + \frac{if_B}{2})} \qquad (4)$$

where $f_B$ is the bandwidth. A least squares fit is performed to the data from the VNA, thus obtaining the resonant frequency and bandwidth of the resonator. An important quantity for the subsequent calculations is the dissipation factor D, which is given by equation (5):

$$D = \frac{f_B}{f_0} = \frac{\text{energy lost over one cycle}}{\text{total energy in the field}}.$$

Note that the power supplied by the VNA is extremely small, that is, only a few milliwatts. Therefore, the magnitudes of the resulting current in the coupling loops, the fields inside the resonator cavity and the eddy currents are extremely small and will not alter the structure of the sample in any way.

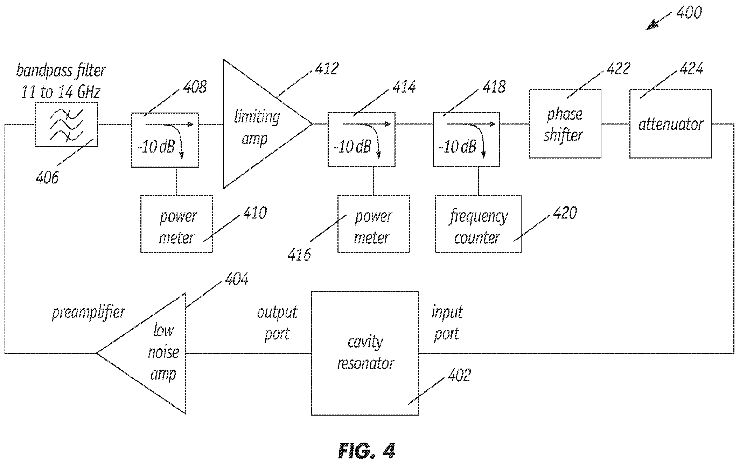

An alternative method for measuring the resonant frequency and dissipation factor of the resonator is with an oscillator read-out circuit 400, which is illustrated in Fig. 4 for the case of a microwave frequency oscillator locked to a single mode of the cavity resonator. In general, oscillators use a resonant mode as a frequency-discriminating element, simultaneously taking advantage of the peak in transmission amplitude that takes place at the resonant frequency and the rapid change in phase response as frequency is tuned across the resonance. Oscillators operate under conditions of positive feedback.

The output port of the cavity resonator 402 is connected to a low-noise amplifier 404 (the preamplifier), which provides linear amplification in some frequency range that includes the resonant mode of interest. The preamplified signal then passes through a bandpass filter 406, in this case with a pass-band between 11 and 14 GHz, chosen so that the oscillator locks to the correct mode of the cavity resonator 402. Following the bandpass filter 406, part of the signal is tapped off by a -10 dB coupler 408 and sent to a power meter 410, for power measurement. As the signal, to this point, has only passed through a series of linear amplification and filtering stages, its power level is accurately proportional to the output power of the resonator in the cavity mode of interest. Following the first power measurement, the signal is further amplified by a limiting amplifier 412, that is, an amplifier designed to operate in the saturation regime, in which the output power saturates at a maximum level, independent of the input power. This gentle nonlinearity of the limiting amplifier is important to achieving the first of the loop conditions for stable oscillation, namely, that of unity loop gain. Following the second stage of amplification, the signal is sampled twice: first to measure the amplified power with power meter 416 of signals from the -10 dB coupler 414; and second, via a frequency counter 420 of signals from the -10 dB coupler 418, to measure the oscillator frequency. The output power of the limiting amplifier is proportional to the power level sent back to the input of the cavity resonator. Following the frequency measurement, the signal is passed through an adjustable phase shifter 422: this is crucial to satisfying the second loop condition for stable oscillation which is that the phase shift on traversing the loop be an integer multiple of $2\pi$. The phase shifter 422 is adjusted so that the frequency of operation is as close as possible to the resonant frequency of the cavity mode, at which point the oscillation frequency provides a good measure of subsequent changes in the resonant frequency of the cavity mode due, for example, to interaction with the sample of interest, and to variation in liftoff. Following the phase shifter 422, the signal passes through an adjustable attenuator 424, which allows the operator to set the overall power level being fed back to the cavity resonator 402, to begin another pass through the feedback/readout electronics. The electronic components of the present invention are preferably fabricated on printed circuit board assemblies.

Once the oscillator is locked to the resonant frequency of the cavity mode of interest, the oscillator frequency provides a good measure of the resonant frequency fo of that mode. The dissipation factor D is obtained separately, from the ratio of the output power of the resonator (as inferred from the first power-meter measurement) to the input power of the resonator (as inferred from the second power-meter measurement). The ratio of these powers is proportional to the transmission response on resonance for the cavity mode of interest, which is a well-defined and monotonic function of the dissipation factor D that can be determined ahead of the measurement either by mathematical modelling or by empirical calibration.

An alternative method of determining the dissipation factor, which is particularly robust in the presence of vibration modulation of the lift-off, is a ring-down measurement. Although not shown explicitly in Fig. 4, a ring-down measurement can be performed by periodically switching off the oscillator feedback signal and then monitoring the free decay of each resonator mode via the output of the first power meter. The ring-down rate is then directly proportional to the dissipation factor D, with the constant of proportionality again determined either by mathematical modelling or by empirical calibration.

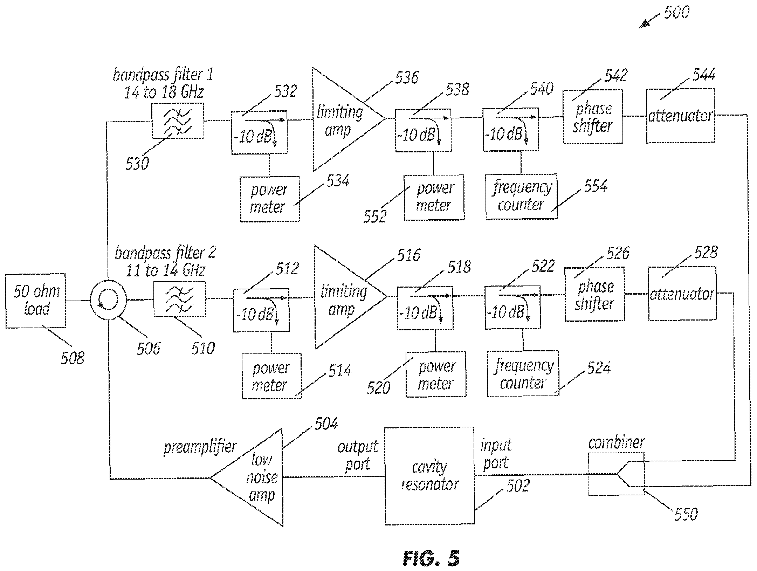

With the present invention, it is important to be able to perform simultaneous measurements of the sample at more than one frequency. This can be achieved by operating several independent oscillators simultaneously, each locked to a different mode of the cavity resonator. The process for doing this is illustrated in Fig. 5 for the case of a two-mode oscillator, but is straightforward to extend to three or more modes.

As in the single-mode case, the output of the cavity resonator is immediately preamplified by a low noise amplifier that has sufficient frequency bandwidth to amplify signals from all the modes of interest. The principal change from the single-mode case is that the preamplifier is followed by signal-separation electronics, which, in this case, separate the preamplified signal into two frequency bands: a lower band between 11 and 14 GHz, and an upper band, from 14 to 18 GHz. A circulator plays the role of a very efficient power splitter, as any out-of-band signal is reflected from the first bandpass filter it is incident on (14 to 18 GHz), and then redirected to the second bandpass filter (11 to 14 GHz). Any signal reflected from both bandpass filters (i.e., any signal that lies outside the overall 11 to 18 GHz operating band) is directed to a 50 Ω matched load where it is absorbed. Once signal separation has occurred, the operation of the remainder of the feedback loop is the same as for the single-mode case, for each feedback path.

In particular, following the bandpass filter 1 530, part of the signal is tapped off by a -10 dB coupler 532 and sent to a power meter 534, for power measurement. Thereafter, the signal is further amplified by a limiting amplifier 536 and the signal is sampled twice: first to measure the amplified power with power meter 552 of signals from the -10 dB coupler 538; and second, via a frequency counter 554 of signals from the -10 dB coupler 540, to measure the oscillator frequency. Following the frequency measurement, the signal is passed through an adjustable phase shifter 542 and the signal then passes through an adjustable attenuator 544.

Similarly, following the bandpass filter 2 510, part of the signal is tapped off by a -10 dB coupler 512 and sent to a power meter 514, for power measurement. Thereafter, the signal is further amplified by a limiting amplifier 516 and the signal is sampled twice: first to measure the amplified power with power meter 520 of signals from the -10 dB coupler 518; and second, via a frequency counter 524 of signals from the -10 dB coupler 522, to measure the oscillator frequency. Following the frequency measurement, the signal is passed through an adjustable phase shifter 526 and the signal then passes through an adjustable attenuator 528.

Following the attenuator stage in each path, the signals are combined by combiner 550 and then fed back to the cavity resonator 502 to begin another pass. The determination of resonant frequency fo and dissipation factor D for each mode takes place in the same way as for the single-mode oscillator.

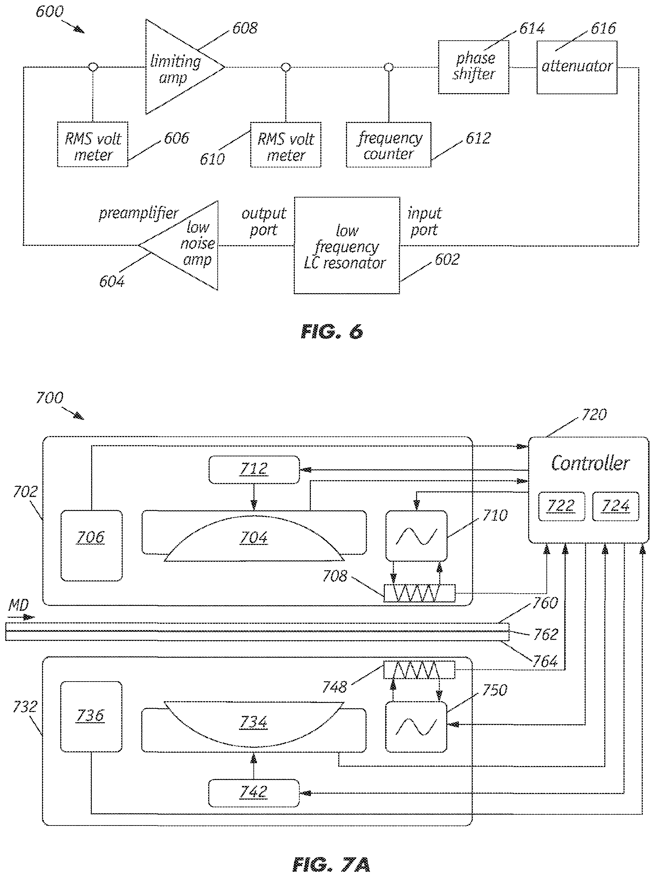

Finally, Fig. 6 illustrates the operation of a single-mode low frequency oscillator locked to the LC resonator. The oscillator readout circuit 600 is similar in form to that of the microwave frequency oscillator, but with the determination of input and output power of the cavity resonator performed by RMS (root- mean-square) volt meters instead of microwave power meters. Additionally, there is no need to use -10 dB couplers to tap off signals for power and frequency measurements: the impedance level in these parts of the circuit is sufficiently low that the frequency counter and RMS volt meters can be directly connected to the main signal path.

In particular, the output port of the low frequency LC resonator 402 is connected to a low-noise amplifier 604 (the preamplifier) and signals therefrom are measured by an RMS volt meter 606 and then the signal is further amplified by a limiting amplifier 608. Following the second stage of amplification, the signal is sampled by RMS volt meter 610 and by frequency counter 612. Following the frequency measurement, the signal is passed through an adjustable phase shifter 422 before the signal passes through an adjustable attenuator 616, which allows the operator to set the overall power level being fed back to the LC resonator 602, to begin another pass through the feedback/readout electronics.

Surface Impedance Measurement

The measured dissipation factor encompasses losses to the eddy currents induced in the sample as well as any intrinsic losses in the resonators. For the cavity resonator this includes losses to the eddy currents induced in the curved mirror, radiative losses and the energy lost through the coupling ports. For the LC resonator the intrinsic losses are due to the wire making up the coil having finite conductance, as well as any losses in the capacitor. Since the dissipation factors corresponding to different loss mechanisms are additive, we have

$$D_{\text{total}}^{\text{cavity}} = D_{\text{sample}} + \underbrace{D_{\text{mirror}} + D_{\text{radiation}} + D_{\text{coupling}}}_{=:D_{\text{intr}}^{\text{cavity}}} \qquad (6)$$

$$D_{\text{total}}^{\text{LC}} = D_{\text{sample}} + \underbrace{D_{\text{wire}} + D_{\text{capacitor}}}_{=:D_{\text{intr}}^{\text{LC}}} \qquad (7)$$

The intrinsic losses (can also be thought of as losses with a notional perfectly conducting sample) are measured in the calibration process and then subtracted from the total losses when measurement of a sample is performed. Losses to the sample can be theoretically predicted as a function of a sample's surface impedance Z, frequency and field profiles:

$$D_{\text{sample}}(\omega) = Z(\omega)\Phi, \tag{8}$$

where $Z = \sqrt{i\omega\mu/\sigma}$ and $\Phi = A/B$ refers to the ratios of integrals of the magnetic field:

$$A = \iint_{\substack{\text{sample} \\ \text{surface}}} |\mathbf{H} \times \mathbf{n}|^2 \, dA \quad \text{and} \quad B = \frac{\mu_0}{2} \iiint_{\Omega} |\mathbf{H}|^2 \, dV, \tag{9}$$

where $\Omega$ is either the cavity or the entire volume above the sample for the cavity or the LC resonator respectively.

To calibrate the sensor, first, the resonant frequencies and the dissipation factors for lift-offs in the operational range are measured using a flat piece of material with known conductivity and permeability as a sample. From each of these total dissipation factors, the theoretically predicted sample dissipation factor is subtracted, and thus the intrinsic dissipation factor, $D_{\text{intr}}$, for each mode, as a function of lift-off is obtained. The relationship between the lift-off and resonant frequency is monotonic and the sample dissipation has little effect on the resonant frequency and, therefore, the intrinsic dissipation factors are determined if the frequency is known.

With the calibration finished, the measurement of the sample surface conductivity is performed as follows:

1. Obtain the resonant frequency, $f_0$, and the dissipation factor, $D_{\text{total}}$, from the resonator with the unknown sample.
2. Knowing $f_0$ calculate the sample dissipation factor, $D_{\text{sample}} = D_{\text{total}} - D_{\text{intr}}(f_0)$.

3. From the corrected resonant frequency, $f_0' = f_0 / (1-D_{\text{total}}/2)$, (refer to Jackson, Classical Electrodynamics, 3rd edition, equation 8.99) infer the lift-off of the resonator using a numerically computed relationship between the frequency and the lift-off. (If the variation in the lift-off is large, an optical displacement sensor can also be used to find an approximate lift-off; this will ensure that the correct mode is selected.)
4. Using the numerically computed value of $\Phi$ for the given lift-off, calculate the surface impedance of the sample $Z = D_{\text{sample}}/\Phi$(lift-off), and infer sample conductivity from it.

With respect to the measurement procedure, note that:
All numerical calculations required for steps (3) and (4) are done in advance for a fixed set of lift-offs; the values required at specific measured lift-offs can be obtained by interpolation.
Since the lift-off is measured during the procedure, the sample can move underneath the curved mirror/coil. As long as the vertical oscillations of the sample are not so large that it touches the mirror/coil, and the oscillation frequency is much slower than the measurement rate, it will not affect the measurement.
The measurement is also unaffected by horizontal movement of the sample, so the sensor can be used for online measurement.
All procedures above were described in terms of a single mode operation. However, since the system is linear, the fields in the resonator can be excited and measured at several different frequencies simultaneously, thus allowing for multimode/multifrequency measurements.
The conductivity measurement can be verified using at least one sample of known conductivity, different from that of the calibration sample.
To summarize, the design described here consists of semi-ellipsoidal mirror with coupling probes, with a sample placed underneath it. By exciting and measuring specific electromagnetic standing waves supported by the described structure, the conductivity of the coating sample can be determined. Due to the carefully chosen shape of the top mirror, the measurement can be performed with an air gap between the sensor and the sample, so the technique is fully contactless and non-destructive. The sensor can also allow for vertical movement of the sample, and is unaffected by horizontal movement, so the measurement can be performed online.

Thickness Calculation Algorithm

For multilayer structure samples, when the skin depth $\delta$ is not much smaller than the thickness of the top layer, the effective surface impedance (measured using the LC resonator) is related to the bulk impedance by

$$Z_{\text{effective}} = Z_{\text{coating}} \left( \frac{Z_{\text{substrate}} + Z_{\text{coating}} \tanh \gamma d}{Z_{\text{coating}} + Z_{\text{coating}} \tanh \gamma d} \right),$$

where

$$\gamma = \sqrt{i\omega\mu\sigma_{coating}}$$

$$Z = \sqrt{\frac{i\omega\mu}{\sigma}}$$

and , where Z and $\sigma$ can be either substrate or coating.

Once the data for $Z_{\text{effective}}$ has been collected at multiple frequencies, the unknown parameters, -depth d, $\sigma_{coaring}$, and $\sigma_{substrate}$- are estimated by performing a least-squares fit to the expression (10) above. If the conductivity of the coating has been successfully measured with the cavity resonator alone and/or the conductivity of the substrate is known, the number of parameters in the fit is reduced accordingly, but the overall approach remains the same. When measurements are available at multiple microwave frequencies, the algorithm can be extended, at the user's discretion, to either perform a more accurate measurement of the conductivity and thickness (on the assumption that the conductivity is frequency independent) or to infer the frequency dependence of the conductivity.

Fig. 7A shows a dual scanning system 700 wherein the upper scanner head 702 houses a first microwave resonator 704 which is connected to RF energy source 712, a first low frequency coil 708 and a first optical displacement sensor 706. Excitation electronics 710 is coupled across coil 708 and generally comprises an oscillation circuit. The lower scanner head 732 houses a second microwave resonator 734 which is connected to RF energy source 742, a second low frequency coil 748 and a second optical displacement sensor 736. Excitation electronics 750 is coupled across coil 748 and generally comprises an oscillation circuit.

A continuous web or sheet of a double-side coated electrode consisting of a metal foil or substrate 762 having an upper coating layer 760 and a lower coating layer 764 travels through the measurement channel between the upper and lower scanner heads in the machine direction (MD). The metal substrate serves as the current collector in electrodes for lithium-ion batteries. Aluminum is used as the metal substrate for cathodes and copper is used as the metal substrate for anodes. The metal substrate is typically about 8 to 20 $\mu$m thick and each coating is typically 75 $\mu$m thick but can be up to 250 $\mu$m thick.

A controller 720, which includes a computer device with processor 722 and memory 724, regulates RF sources 712 and 742 and excitation electronics 710 and 750, is employed. During operations, signals from microwave resonators 704, 734, optical displacement sensors 706, 736 and low frequency coils 708, 750. Analysis of the data yields the thickness and the conductivity of each coating layer. The controller 720 which analyzes sensor data can also include a removable storage and/or a non-removable storage. The computing device is illustrative and may be in different forms in different embodiments. For example, the computing device may instead be a smartphone, a tablet, a smartwatch, or other computing devices. The storage may also, or alternatively, include cloud-based storage accessible via a network, such as the Internet. The memory may include a volatile memory and a non-volatile memory.

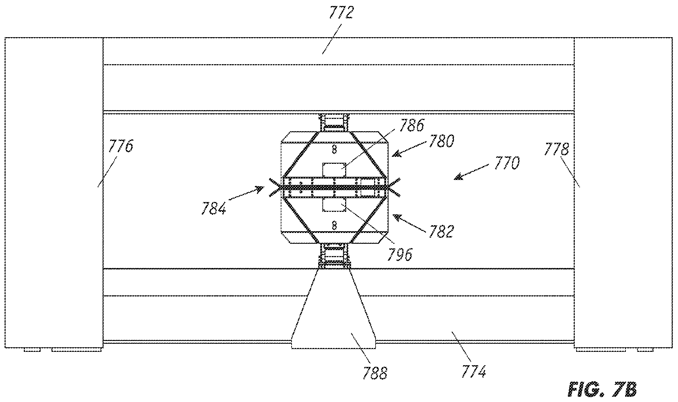

Fig. 7B shows a dual scanner 770 in an electrode web manufacturing or processing system. The scanner 770 travels back and forth along the cross direction, which is perpendicular to the MD of the moving web (not shown). The scanner 770 is driven by a motorized drive mechanism (not shown). The scanner 770 which includes an upper mounting head 780 and a lower mounting head 782 that are mounted on carriages that are supported by upper and lower rails 772 and 774, respectively. Movement of the two aligned mounting heads is synchronized and the heads define a channel or gap 784 through which the web travels. The support structures 776, 778 in this O-Frame scanner maintain separation of the rails. A web (not shown) passes horizontally between the support structures 776, 778 as the scanner travels over at least one surface of the web. The sensor devices 786 and 796 include components as illustrated in Fig. 7A.

The foregoing has described the principles, preferred embodiments and modes of operation of the present invention. However, the invention should not be construed as being limited to the particular embodiments discussed. Thus, the above-described embodiments should be regarded as illustrative rather than restrictive, and it should be appreciated that variations may be made in those embodiments by workers skilled in the art without departing from the scope of the present invention as defined by the following claims.

**Claims**

1. A sensor system comprising:

(a) a microwave resonator;

(b) a radio-frequency (RF) resonator; and

(c) means for acquiring sensor data from the microwave resonator and the RF resonator obtained when measuring a coated substrate comprising a coated layer on at least one side of a metal substrate to determine the thickness of a first coating layer that is facing the microwave resonator and RF resonator.

2. The sensor system of claim 1 wherein the means for analyzing the sensor data comprises a computer that is adapted to determine one or more properties of the first coating layer that is selected from the group consisting of conductivity, basis weight, electric permittivity and porosity.

3. The sensor system of either of claims 1-2, wherein the microwave resonator is configured to operate with one or more resonant mode patterns and wherein the RF resonator is configured to operate with more than one resonant mode patterns.

4. The sensor system of claim 3 wherein the microwave resonator is configured to operate with more than one resonant mode pattern at a time in order to extract information about the first coating layer at different frequencies.

5. The sensor system of any preceding claim, further comprising an optical displacement sensor which is configured to measure the separation between a surface of the first coating layer and the optical displacement sensor.

6. The sensor system of any preceding claim comprising means for producing microwaves that comprise a first oscillation circuit that is coupled to the microwave resonator and a second oscillation circuit that is coupled to the RF resonator.

7. The sensor system of any preceding claim wherein the microwave resonator and the RF resonator are configured to operate:

   (i) as oscillators, oscillating at a natural resonance of the microwave resonator and RF resonator, respectively,

   (ii) using a frequency sweep measurement, or

   (iii) using a ring-down measurement.

8. The sensor system of any preceding claim comprising means for introducing microwave energy to the microwave resonator; and means for introducing RF energy to the RF resonator.

9. The sensor system of claim 8 wherein:

   the microwave resonator has a first set of antennas and a means for energizing the first set of antennas and wherein first information signals are received by the first set of antennas and wherein the RF resonator has a second set of antennas and means for energizing the second set of antennas and wherein second information signals are received by the second set of antennas; and/or

   wherein the RF resonator comprises one or more capacitors and one or more inductors and wherein the capacitors and inductors arranged in a topology that supports multiple resonant frequencies.

10. The sensor system of any preceding claim wherein the microwave resonator comprises an RF/microwave choke that is configured to suppress radiative energy loss.

11. The sensor system of any preceding claim wherein the microwave resonator comprises a curved mirror which has a semi-ellipsoidal geometry.

12. A system for measuring a property of a continuous sheet which has a first side and a second side and which travels in a downstream machine direction that comprises:

   (a) a first scanner head disposed adjacent to a first side of the sheet, the first scanner head comprising:

      (i) a first microwave resonator; and

      (ii) a first radio-frequency (RF) resonator;

   (b) a second scanner head disposed adjacent to the second side of the sheet, the second scanner head comprising:

(i) a second microwave resonator; and
(ii) a second radio-frequency (RF) resonator;

(c) means for analyzing sensor data from:

(i) the first microwave resonator and the first RF resonator,
(ii) the second microwave resonator and the second RF resonator, or
(iii) both the first microwave resonator and the second microwave resonator and both the first RF resonator and second resonator obtained;

when measuring a coated substrate comprising a coated layer on at least one side of a metal substrate to determine the thickness of:

(i) a first coating layer that is facing the first scanning head,
(ii) a second coating layer that is facing the second scanning head, or
(iii) both the first coating layer that is facing the first scanning head and the second coating layer that is facing the second scanning head.

13. A contactless method of measuring the thickness of a coating layer on a coated metal substrate that comprises:

(a) positioning a first sensor comprising a first microwave resonator and a first radiofrequency (RF) resonator adjacent the coating layer;
(b) applying a first RF energy to the first microwave resonator;
(c) applying a second RF energy to the first RF resonator; and
(d) analyzing first sensor data from the first microwave resonator and the first RF resonator to calculate the thickness of the coating layer.

14. The method of claim 13 wherein the coated metal comprises a double-side coated electrode that comprises a metal substrate having a first electrode coating layer and a second electrode coating layer, wherein the method further comprises:

(e) positioning a second sensor comprising a second microwave resonator and a second RF resonator adjacent the second electrode coating layer;
(f) applying a third RF energy to the second microwave resonator;
(g) applying a fourth RF energy to the second RF resonator; and
(h) analyzing second sensor data from the second microwave resonator and the second RF resonator to calculate the thickness of the second electrode coating layer.

15. The method of either of claims 13 or 14, further comprising analyzing signals from the first RF resonator to calculate the electrical conductivity of the coating layer.

FIG. 1

200

SMA (206)    SMA (208)

224    226

202

220    222

(210)

resonator cavity (204)

2B    2B

RF choke (210)    lift-off ≈ 5-10 mm

Top coating (216)

substrate (214)

Bottom coating (236)

**FIG. 2A**

202

210

220    222

210

**FIG. 2B**

**FIG. 3A**

**FIG. 3B**

FIG. 4

**FIG. 5**

**FIG. 6**

**FIG. 7A**

FIG. 7B

Europäisches
Patentamt

European
Patent Office

Office européen
des brevets

# EUROPEAN SEARCH REPORT

**Application Number**

EP 25 16 2349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/096308 A1 (HUGHES MICHAEL KON YEW [CA] ET AL) 26 March 2020 (2020-03-26) * paragraphs [0019] - [0064]; figures 1-6 * | 1-15 | INV. G01B7/06 G01B15/02 |
| A | US 2009/140751 A1 (TAKEUCHI JIMMY S [US] ET AL) 4 June 2009 (2009-06-04) * paragraphs [0023] - [0028]; figures 1-2 * | 1-15 | |

----- 

----- 

**TECHNICAL FIELDS SEARCHED (IPC)**

G01B

The present search report has been drawn up for all claims

| Place of search | Date of completion of the search | Examiner |
|---|---|---|
| Munich | 4 August 2025 | Trique, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

## ANNEX TO THE EUROPEAN SEARCH REPORT
## ON EUROPEAN PATENT APPLICATION NO.

EP 25 16 2349

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2025

| Patent document cited in search report | Publication date | Patent family member(s) | Publication date |
|---|---|---|---|
| US 2020096308 A1 | 26-03-2020 | CA 3113260 A1 | 02-04-2020 |
| | | CN 112789478 A | 11-05-2021 |
| | | EP 3857163 A1 | 04-08-2021 |
| | | JP 7203961 B2 | 13-01-2023 |
| | | JP 2022500660 A | 04-01-2022 |
| | | KR 20210057809 A | 21-05-2021 |
| | | US 2020096308 A1 | 26-03-2020 |
| | | WO 2020068711 A1 | 02-04-2020 |
| US 2009140751 A1 | 04-06-2009 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHU et al.** Millimeter Wave Measurement of the Low-Loss Dielectric in Vacuum Electronic Devices With Reflection-Type Hemispherical Open Resonator. *Journal of Infrared, Millimeter and Terahertz Waves*, 2015, vol. 36 (6), 556-568